# EUROPÄISCHE PATENTSCHRIFT

(11) **EP 4 282 525 B1**
(45) Veröffentlichungstag und Bekanntmachung des Hinweises auf die Patenterteilung: **03.07.2024**
(21) Anmeldenummer: 22175270.2
(22) Anmeldetag: 25.05.2022
(51) Int. Cl.: B01J 23/40, B01J 35/58, C01B 21/26

(54) **KATALYSATORSYSTEM FÜR EINEN STRÖMUNGSREAKTOR SOWIE VERFAHREN ZUR KATALYTISCHEN OXIDATION VON AMMONIAK**
CATALYST SYSTEM FOR A FLOW REACTOR AND METHOD FOR THE CATALYTIC OXIDATION OF AMMONIA
SYSTÈME DE CATALYSEUR POUR UN RÉACTEUR À CIRCULATION, AINSI QUE PROCÉDÉ D'OXYDATION CATALYTIQUE D'AMMONIAC

(43) Veröffentlichungstag der Anmeldung: 29.11.2023
(73) Patentinhaber: Heraeus Precious Metals GmbH & Co. KG, 63450 Hanau (DE)
(72) Erfinder: HESSE, Jens, 63450 Hanau (DE); HIRSCHEL, Pascal, 63450 Hanau (DE); MAIER, Dirk, 63450 Hanau (DE); JANTSCH, Uwe, 63450 Hanau (DE)
(74) Vertreter: Heraeus IP

(56) Entgegenhaltungen:
- EP-A1- 1 284 927
- EP-A1- 3 680 015
- EP-B1- 1 284 927

## Beschreibung

Die vorliegende Erfindung betrifft ein Katalysatorsystem für Strömungsreaktoren, das durch die Abfolge der eingesetzten edelmetallhaltigen Legierungen der das Katalysatorsystem bildenden Katalysatornetze charakterisiert wird. Außerdem betrifft die Erfindung ein Verfahren zur katalytischen Verbrennung von Ammoniak, bei dem ein mindestens Ammoniak enthaltendes Frischgas durch ein Katalysatorsystem geleitet wird.

Katalysatorsysteme im Sinne der vorliegenden Erfindung werden insbesondere für Gasreaktionen verwendet. Sie werden beispielsweise bei der Herstellung von Blausäure nach dem Andrussow-Verfahren oder bei der Herstellung von Salpetersäure nach dem Ostwald-Verfahren eingesetzt. Um für diese Reaktionen eine große katalytisch-aktive Oberfläche bereitzustellen, weisen solche Katalysatoren in der Regel eine räumliche, gasdurchlässige Struktur auf. Auch Auffangsysteme zur Rückgewinnung von verdampften katalytisch aktiven Bestandteilen basieren häufig auf solchen netzförmigen Strukturen. Es werden zweckmäßigerweise meist mehrere Netze hintereinander angeordnet und zu einem Katalysatorsystem zusammengefasst. Die Katalysatornetze bestehen meist aus ein- oder mehrlagigen Gestricken, Gewirken oder Geweben. Die einzelnen Netze bestehen dabei aus feinen Edelmetalldrähten, die überwiegend Platin (Pt), Palladium (Pd), Rhodium (Rh) oder Legierungen dieser Metalle enthalten. Vor allem Auffang-Netze können auch weitere Bestandteile wie beispielsweise Nickel enthalten.

Je nach Bauart kommen in Strömungsreaktoren Systeme mit 2 bis 50 Katalysator-Netzen mit einem Durchmesser von bis zu 6 m zum Einsatz. Der Edelmetalleinsatz stellt eine hohe, gebundene Investition dar und wird so gering wie möglich gehalten. Andererseits hängt die "katalytische Effizienz", die eine wichtige Kenngröße und ein Maß für dauerhaft hohe Umsätze der Edukte und gute Ausbeute ist, vom Edelmetall-Anteil ab. Aufgrund von steigenden Edelmetallpreisen und der dadurch steigenden Kapitalbindung in den Katalysatorsystemen wird angestrebt, den Edelmetallgehalt der Katalysatorsysteme bei gleichbleibender Effizienz zu minimieren.

Während des Betriebs verlieren die Katalysatornetze infolge von Oxidation und Sublimation kontinuierlich Edelmetall, so dass sie von Zeit zu Zeit (Standzeit, Gebrauchsdauer) mit gewissem Aufwand ausgetauscht werden müssen. Als geeigneter Kompromiss hinsichtlich Gebrauchsdauer, katalytischer Effizienz und Edelmetalleinsatz hat sich die PtRh5-Legierung erwiesen, die sich als industrieller Standard für Edelmetallkatalysatoren für den Einsatz in Mitteldruckanlagen durchgesetzt hat.

Die EP 3680015 A1 offenbart Katalysatorsysteme aus mindestens zwei Netzlagen, bei dem bevorzugt binäre PtRh-Legierungen zum Einsatz kommen, deren Rhodiumgehalt in Strömungsrichtung abnimmt. Der Platingehalt der Katalysatorsysteme ist aufgrund der Verwendung von Platinlegierungen insgesamt hoch.

Um den Edelmetalleinsatz unter Beibehaltung der katalytischen Effizienz zu verringern, wird in der EP 1284927 A1 ein Katalysatorsysteme aus mindestens zwei Netzlagen vorgeschlagen, bei dem das in Strömungsrichtung gesehen erste Netz aus einer Platinrhodiumlegierung und das zweite Netz aus einer Palladiumrhodiumlegierung gebildet wird.

In der CN 101554585 A wird ein Katalysatorsystem umfassend mindestens drei Netzlagen aus Legierungen mit unterschiedlichen Zusammensetzungen beschrieben. Die Platinlegierung der mittleren Netzlage enthält mit 50 - 73 Gew.-% einen hohen Platinanteil.

Aufgabe der vorliegenden Erfindung war die Bereitstellung eines Katalysatorsystems für einen Strömungsreaktor, bei dem das eingesetzte Edelmetall mit maximaler Effizienz genutzt werden kann.

Außerdem lag der Erfindung die Aufgabe zugrunde, ein Verfahren für den Einsatz eines solchen Katalysatorsystems anzugeben.

Die Aufgabe wird gelöst durch ein Katalysatorsystem für einen Strömungsreaktor, umfassend mindestens drei in Strömungsrichtung hintereinander angeordnete Katalysatornetz-Gruppen, wobei jede Katalysatornetz-Gruppe aus mindestens einem Katalysatornetz aus jeweils mindestens einem Edelmetalldraht gebildet wird und
- die erste Katalysatornetz-Gruppe mindestens ein Katalysatornetz aus mindestens einem ersten Edelmetalldraht aus einer Platinlegierung aufweist, wobei die Platinlegierung neben Verunreinigungen aus 80 - 98 Gew.-% Platin, 2 - 20 Gew.-% Rhodium und 0 - 20 Gew.-% Palladium besteht,
- die zweite Katalysatornetz-Gruppe mindestens ein Katalysatornetz aus mindestens einem zweiten Edelmetalldraht aus einer Palladiumlegierung aufweist, wobei die Palladiumlegierung des zweiten Edelmetalldrahts neben Verunreinigungen aus 70 - 97 Gew.-% Palladium, 0 - 10 Gew.-% Rhodium und 3 - 30 Gew.-% mindestens eines weiteren Metalls besteht, wobei das mindestens eine weitere Metall ausgewählt ist aus der Gruppe bestehend aus Nickel, Wolfram, Platin und Gold und
- die dritte Katalysatornetz-Gruppe mindestens ein Katalysatornetz aus mindestens einem dritten Edelmetalldraht aus einer Palladiumlegierung aufweist, wobei die Palladiumlegierung des dritten Edelmetalldrahts neben Verunreinigungen aus 72 - 97 Gew.-% Palladium, 0 - 10 % Gew.-% Rhodium und 3 - 28 Gew.-% mindestens eines weiteren Metalls besteht, wobei das mindestens eine weitere Metall ausgewählt ist aus der Gruppe bestehend aus Nickel, Wolfram, Platin und Gold
dadurch gekennzeichnet, dass der Rhodium-Gehalt der Edelmetalldrähte der Katalysatornetz-Gruppen in Strömungsrichtung abnimmt oder gleichbleibt und der Palladium-Gehalt der Edelmetalldrähte der Katalysatornetz-Gruppen in Strömungsrichtung zunimmt.

Durch den Einsatz von Palladiumlegierungen für die zweite und die dritte Katalysatornetzgruppe kann der Platingehalt des Katalysatorsystems insgesamt relativ niedrig gehalten werden. Im Rahmen der Erfindung wurde als überraschend erkannt, dass die Positionierung von Katalysatornetzen mit unterschiedlichen Zusammensetzungen im in Strömungsrichtung gesehen hinteren Bereich des Katalysatorsystems einen signifikanten Einfluss auf die Effizienz des Systems hat.

Die vorliegende Erfindung betrifft ein Katalysatorsystem für einen Strömungsreaktor. In Strömungsreaktoren werden typischerweise Katalysatoren in Form von gasdurchlässigen Flächengebilden in die Reaktionszone in einer Ebene senkrecht zur Strömungsrichtung des Frischgases eingebaut. Solche gasdurchlässigen Flächengebilden werden meist in Form von Katalysatornetzen eingesetzt. Unter einem Katalysatorsystem wird ein Ensemble von solchen Katalysatornetzen verstanden.

Das Katalysatorsystem gemäß der vorliegenden Erfindung umfasst mindestens drei in Strömungsrichtung hintereinander angeordnete Katalysatornetz-Gruppen. Jede Katalysatornetz-Gruppe wird aus mindestens einem Katalysatornetz aus jeweils mindestens einem Edelmetalldraht gebildet. Unter einer Katalysatornetzgruppe wird ein Ensemble aus mindestens einem Katalysatornetz verstanden, bei dem sich die Zusammensetzung der Edelmetalldrähte nicht unterscheidet. Typischerweise umfasst eine Katalysatornetzgruppe mehr als ein Katalysatornetz. Ein erfindungsgemäßes Katalysatorsystem umfasst also mindestens drei Katalysatornetze aus Edelmetalldrähten mit drei unterschiedlichen Zusammensetzungen.

Die reagierenden Gase passieren in Strömungsrichtung zunächst die erste, im Anschluss die zweite und abschließend die dritte Katalysatornetzgruppe.

Unter einem Katalysatornetz wird ein ein- oder mehrlagiges gasdurchlässiges Flächengebilde verstanden. Die Flächenbildung der Katalysatornetze kann durch maschenförmiges Verschlingen eines oder mehrerer Edelmetalldrähte erreicht werden. Katalysatornetze können beispielswiese durch Weben, Wirken oder Stricken eines Edelmetalldrahts oder mehrerer Edelmetalldrähte hergestellt werden. Die Struktur der Katalysatornetze kann dadurch gezielt durch die Verwendung unterschiedlicher Web-, Wirk- oder Strickmuster und/oder unterschiedliche Maschenweiten eingestellt werden.

Das Katalysatornetz oder die Katalysatornetze der ersten Katalysatornetzgruppe, das Katalysatornetz oder die Katalysatornetze der zweiten Katalysatornetzgruppe und das Katalysatornetz oder die Katalysatornetze der dritten Katalysatornetzgruppe können unabhängig voneinander gewirkt, gewebt und/oder gestrickt sein. Es können also gewirkte, gewebte und gestrickte Katalysatornetze beliebig miteinander kombiniert werden. Beispielsweise kann das Katalysatornetz oder die Katalysatornetze der ersten Katalysatornetzgruppe gewirkt sein und das Katalysatornetz oder die Katalysatornetze der zweiten und der dritten Katalysatornetzgruppe gestrickt. Ebenso kann das Katalysatornetz oder die Katalysatornetze der ersten Katalysatornetzgruppe gestrickt sein, das Katalysatornetz oder die Katalysatornetze der zweiten gestrickt und das Katalysatornetz oder die Katalysatornetze der dritten Katalysatornetzgruppe gewebt.

Das Katalysatornetz oder die Katalysatornetze der ersten Katalysatornetzgruppe weisen ein erstes Web-, Wirk- oder Strickmuster und eine erste Maschenweite auf. Das Katalysatornetz oder die Katalysatornetze der zweiten Katalysatornetzgruppe weisen ein zweites Web-, Wirk-oder Strickmuster und eine zweite Maschenweite auf und Katalysatornetz oder die Katalysatornetze der dritten Katalysatornetzgruppe weisen ein drittes Web-, Wirk- oder Strickmuster und eine dritte Maschenweite auf.

Es hat sich als vorteilhaft erwiesen, wenn mindestens zwei der ersten, zweiten und dritten Web-, Wirk- oder Strickmuster gleich sind, besonders vorteilhaft sind sowohl das erste, zweite und dritte Web-, Wirk- oder Strickmuster gleich.

Weiterhin kann es vorteilhaft sein, wenn mindestens zwei der ersten, zweiten und dritten Maschenweiten gleich sind, besonders vorteilhaft sind sowohl die erste, zweite und dritte Maschenweite gleich.

Das Flächengewicht der Katalysatornetze ist nicht weiter beschränkt. Das Flächengewicht der Katalysatornetze kann im Bereich von 100 bis 950 g/m² liegen, insbesondere im Bereich von 150 bis 800 g/m². Die Flächengewichte der Katalysatornetze innerhalb einer der mindestens drei Katalysatornetzgruppen können gleich oder unterschiedlich sein. Es hat sich als vorteilhaft erwiesen, wenn die Katalysatornetze einer Katalysatornetz-Gruppe über das gleiche Flächengewicht verfügen.

Die Flächengewichte der Katalysatornetze der mindestens drei Katalysatornetzgruppen können in Strömungsrichtung gleichbleiben, abnehmen oder zunehmen.

In bevorzugten Ausführungsformen kann mindestens eins der Katalysatornetze eine dreidimensionale Struktur aufweisen. Im Rahmen dieser Anmeldung werden Netze als flache, zweidimensionale Gegenstände verstanden. Unter einer dreidimensionalen Struktur ist zu verstehen, dass das Katalysatornetz neben seiner planaren Ausdehnung auch eine Erstreckung in die dritte Raumdimension aufweist. Katalysatornetze mit dreidimensionaler Struktur weisen eine größere Oberfläche auf, was sich vorteilhaft auf die katalytische Effektivität auswirken und den Druckabfall im Strömungsreaktor verringern kann. Eine dreidimensionale Struktur kann durch die Verwendung mindestens eines Edelmetalldrahtes mit zwei- oder dreidimensionaler Struktur oder durch die Strukturierung des Katalysatornetzes erhalten werden. Dreidimensionale Strukturen des Katalysatornetzes können beispielsweise wellenförmig oder beulenförmig sein. Zur Erzeugung solcher Strukturen kann ein zunächst planares Katalysatornetz einem Verfahrensschritt unterzogen werden, bei dem eine dreidimensionale Struktur eingeprägt wird oder durch Faltung erzeugt wird.

Dreidimensionale Strukturen können erhalten werden, indem ein planares Katalysatornetz auf eine rigide, durchlässige, aber nicht planare Oberfläche aufgelegt wird, zum Beispiel ein vorgeformtes Metallnetz. Die Struktur einer solchen strukturierten, durchlässigen Oberfläche, die nicht katalytisch wirksam sein muss, wird dann auf das Katalysatornetz übertragen. Katalysatornetze mit solchen Strukturen werden auch als korrugiert bezeichnet.

Es hat sich als vorteilhaft erwiesen, wenn mindestens ein Katalysatornetz des erfindungsgemäßen Katalysatorsystems eine dreidimensionale Struktur aufweist, insbesondere wenn es sich bei dem Katalysatornetz um ein korrugiertes Katalysatornetz handelt. Es kann vorteilhaft sein, wenn mindestens ein Katalysatornetz jeder Katalysatornetzgruppe eine dreidimensionale Struktur aufweist.

Die Anzahl der verwendeten Katalysatornetze hängt von den Bedingungen ab, bei denen der Strömungsreaktor betrieben wird. Maßgeblich ist unter anderem der Durchsatz an Frischgas, der unter anderem vom Druck abhängt. Beispielsweise können in einem Strömungsreaktor, der bei niedrigem Druck, z. B. bis etwa 5 bar abs., betrieben wird, typischerweise weniger als 15, oft zwischen 5 und 10 Katalysatornetze verwendet werden, während bei höherem Druck, z. B. bis 15 bar, eine größere Anzahl von Katalysatornetzen, typischerweise mehr als 20, oft zwischen 30 und 50, verwendet werden kann.

Die Katalysatornetze werden aus jeweils mindestens einem Edelmetalldraht gebildet. Das Edelmetall ist vorzugsweise ausgewählt aus der Gruppe die aus den Platinmetallen, Gold und Silber besteht. Unter Platinmetallen sind die Metalle der sogenannten Platingruppe, also Platin (Pt), Palladium (Pd), Iridium (Ir), Rhodium (Rh), Osmium (Os) und Ruthenium (Ru), zu verstehen. Unter einem Edelmetalldraht wird ein Draht verstanden, der aus Edelmetall oder einer Edelmetalllegierung besteht.

Vorzugsweise werden Edelmetalldrähte eingesetzt, die einen Durchmesser 40 - 250 µm aufweisen, bevorzugt 50 - 200 µm, besonders bevorzugt 60 - 150 µm.

Die Edelmetalldrähte können als Runddraht, das heißt mit einem runden Querschnitt, ausgebildet sein. In einer anderen Ausführung kann mindestens einer der Edelmetalldrähte als abgeflachter Runddraht oder als Draht mit einem anderen Querschnitt ausgeführt werden.

Die Edelmetalldrähte können mehrere Drähte, in diesem Fall auch als Filamente bezeichnet, umfassen. Die Filamente können alle aus dem gleichen Material bestehen, d.h. alle edelmetallhaltig sein, oder aus unterschiedlichen Materialien bestehen, die wiederum nicht alle edelmetallhaltig sein müssen.

Die Filamente können miteinander verdrillt sein, in diesen Fällen weisen die Edelmetalldrähte eine seilartige Struktur auf.

Die Edelmetalldrähte können einen oder mehrere helixförmig ausgebildete Längenabschnitte umfassen oder über als über die gesamte Länge als helixförmig gebogener Draht ausgebildet sein. Falls ein Edelmetalldraht einen helixförmig ausgebildeten Längenabschnitt aufweist, ist beispielsweise über die Drahtdicke oder über die Anzahl der Windungen des helixförmigen Längenabschnittes sowohl die aktive Katalysatoroberfläche eines Katalysatornetzes als auch die Masse des Katalysatornetzes bezogen auf eine Oberflächeneinheit einstellbar. Bei Verwendung solcher Edelmetalldrähte kann das daraus gefertigte Katalysatornetz eine dreidimensionale Struktur aufweisen.

In vielen Fällen kann es vorteilhaft sein, wenn ein Katalysatornetz aus zwei oder mehr Edelmetalldrähten gebildet wird. In diesen Fällen können die Edelmetalldrähte aus dem gleichen Material oder aus unterschiedlichen Materialien bestehen. Die mehreren Edelmetalldrähte können den gleichen oder unterschiedliche Durchmesser aufweisen.

Die erste Katalysatornetz-Gruppe des erfindungsgemäßen Katalysatorsystems umfasst mindestens ein Katalysatornetz aus mindestens einem ersten Edelmetalldraht. Der erste Edelmetalldraht weist eine Platinlegierung auf, die neben Verunreinigungen aus 80 - 98 Gew.-% Platin, 2 - 20 Gew.-% Rhodium und 0 - 20 Gew.-% Palladium besteht.

Unter einer Platinlegierung wird eine Legierung verstanden, die zu mehr als 50 Gew.-% aus Platin besteht. Dass die Legierung aus 80 - 98 Gew.-% Platin besteht bedeutet, dass der Gewichtsanteil des Platins 80 - 98 Gew.-% des Gewichts der gesamten Legierung ausmacht. Bevorzugt enthält die Platinlegierung des ersten Edelmetalldrahts 85 - 97 Gew.-% Platin, insbesondere 90 - 95 Gew.-%.

Die hierin beschriebenen Edelmetalllegierungen können Verunreinigungen enthalten. Unter einer Verunreinigung ist vorliegend eine beabsichtige oder durch die Herstellung der Legierung oder der Legierungen bedingte und unvermeidbare Verunreinigung zu verstehen. Sofern nicht anders angegeben, beträgt der Anteil der Verunreinigungen in der Summe maximal 1 Gew.-% bei allen beschriebenen Edelmetalllegierungen bezogen auf das Gesamtgewicht der jeweiligen Edelmetalllegierung, bevorzugt maximal 0,5 Gew.-%. Die Edelmetalllegierungen der vorliegenden Anmeldung umfassen insbesondere die Platinlegierung des ersten Edelmetalldrahts und die Palladiumlegierungen des zweiten und dritten Edelmetalldrahts.

In bevorzugten Ausführungsformen enthält die Platinlegierung des ersten Edelmetalldrahts 3 - 18 Gew.-% Rhodium, insbesondere 5 - 15 Gew.-%.

Bevorzugt enthält die Platinlegierung des ersten Edelmetalldrahts nicht mehr als 15 Gew.-% Palladium, insbesondere nicht mehr als 10 Gew.-%.

Die Platinlegierung des ersten Edelmetalldrahts kann neben Platin, Rhodium und optional Palladium Verunreinigungen enthalten. Der Anteil der Verunreinigungen beträgt in der Summe maximal 1 Gew.-% der Platinlegierung, bevorzugt maximal 0,5 Gew.-%.

Besonders bevorzugt umfasst der erste Edelmetalldraht eine binäre Platinlegierung, bestehend aus Platin und Rhodium. Die binäre Platinlegierung kann außerdem wie oben beschrieben Verunreinigungen enthalten. In solchen Fällen handelt es sich bei der Platinlegierung des ersten Edelmetalldrahtes beispielsweise um PtRh3, PtRh5, PtRh8, PtRh10 oder PtRh15. PtRh(X) bedeutet hierbei, dass die Legierung X Gewichts-% Rhodium enthält und bis auf Verunreinigungen zu (100 - X) Gewichts-% aus Platin besteht.

In bevorzugten Ausführungsformen umfasst die erste Katalysatornetzgruppe 1 bis 10 Katalysatornetze, bevorzugt 3 bis 8 Katalysatornetze. Insbesondere kann die erste Katalysatornetzgruppe 1, 2, 3, 4, 5, 6, 7, 8, 9 oder 10 Katalysatornetze umfassen.

Es hat sich überraschend gezeigt, dass es für eine ausreichende katalytischen Effizienz genügt, wenn die erste Katalysatornetzgruppe nur ein Katalysatornetz umfasst. Dies stellt eine besonders einfache und daher bevorzugte Ausführungsform des Katalysatorsystems dar.

Die zweite Katalysatornetz-Gruppe des erfindungsgemäßen Katalysatorsystems umfasst mindestens ein Katalysatornetz aus mindestens einem zweiten Edelmetalldraht aus einer Palladiumlegierung. Die Palladiumlegierung des zweiten Edelmetalldrahts besteht neben Verunreinigungen aus 70 - 97 Gew.-% Palladium, 0 - 10 Gew.-% Rhodium und 3 - 30 Gew.-% mindestens eines weiteren Metalls, wobei das mindestens eine weitere Metall ausgewählt ist aus der Gruppe bestehend aus Nickel, Wolfram, Platin und Gold.

Unter einer Palladiumlegierung wird eine Legierung verstanden, die zu mehr als 50 Gew.-% aus Palladium besteht. Bevorzugt weist die Palladiumlegierung des zweiten Edelmetalldrahtes einen Palladium-Gehalt im Bereich von 75 - 95 Gew.-% auf, bevorzugt von 80 - 90 Gew.-%.

Die Palladiumlegierung des zweiten Edelmetalldrahtes kann neben Palladium, Nickel, Wolfram, Platin oder Gold und optional Rhodium Verunreinigungen enthalten. Der Anteil der Verunreinigungen beträgt in der Summe maximal 1 Gew.-% der Palladiumlegierung des zweiten Edelmetalldrahtes, bevorzugt maximal 0,5 Gew.-%.

Bevorzugt enthält die Palladiumlegierung des zweiten Edelmetalldrahtes das mindestens eine weitere Metall im Bereich von 5 - 28 Gew.-%, besonders bevorzugt im Bereich von 8 - 25 Gew.-%.

Die Palladiumlegierung des zweiten Edelmetalldrahtes kann beliebige Kombinationen aus der Gruppe bestehend aus Nickel, Wolfram, Platin und Gold enthalten.

In bevorzugten Ausführungsformen weist die Palladiumlegierung des zweiten Edelmetalldrahtes einen Rhodium-Gehalt von 1 - 10 Gew.-% auf, insbesondere im Bereich von 3 - 8 Gew.-%. Hinsichtlich einer hohen katalytischen Effizienz bei gleichzeitig geringen oder keinen negativen Auswirkungen auf Gebrauchsdauer kann es vorteilhaft sein, dass die Palladiumlegierung des zweiten Edelmetalldrahts mindestens 1,5 Gew.-% Rhodium enthält. Besonders bevorzugt umfasst der zweite Edelmetalldraht in solchen Fällen einen Platin-Gehalt von mindestens 1,5 Gew.-%.

Der zweite Edelmetalldraht kann eine ternäre Palladiumlegierung, bestehend aus Palladium, Platin und Rhodium oder eine binäre Palladiumlegierung die neben Palladium Nickel, Wolfram, Platin oder Gold enthält, umfassen. Die binäre oder ternäre Palladiumlegierung kann außerdem wie oben beschrieben Verunreinigungen enthalten.

Bei der Palladiumlegierung des zweiten Edelmetalldrahtes kann es sich beispielsweise um PdPt10Rh5, PdPt15Rh3, PdPt20Rh1, PdNi5, PdW5, PdPt5, PdAu5, PdNi3, PdW3, PdPt3 oder PdAu3 handeln. PdPt(Z)Rh(X) bedeutet hierin, dass die Legierung Z Gewichts-% Platin, X Gewichts-% Rhodium enthält und bis auf Verunreinigungen zu (100 - (Z+X)) Gewichts-% aus Palladium besteht.

In bevorzugten Ausführungsformen umfasst die zweite Katalysatornetzgruppe 1 bis 10 Katalysatornetze, bevorzugt 3 bis 8. Insbesondere kann die zweite Katalysatornetzgruppe 1, 2, 3, 4, 5, 6, 7, 8, 9 oder 10 Katalysatornetze umfassen. Bevorzugt umfasst die zweite Katalysatornetzgruppe mehr Katalysatornetze als die erste Katalysatornetzgruppe.

Die dritte Katalysatornetz-Gruppe des erfindungsgemäßen Katalysatorsystems umfasst mindestens ein Katalysatornetz aus mindestens einem dritten Edelmetalldraht aus einer Palladiumlegierung.

Die Palladiumlegierung des dritten Edelmetalldrahts besteht neben Verunreinigungen aus 72 - 97 Gew.-% Palladium, 0 - 10 % Gew.-% Rhodium und 3 -28 Gew.-% mindestens eines weiteren Metalls, wobei das mindestens eine weitere Metall ausgewählt ist aus der Gruppe bestehend aus Nickel, Wolfram, Platin und Gold.

Bevorzugt weist die Palladiumlegierung des dritten Edelmetalldrahtes einen Palladium-Gehalt im Bereich von 75 - 95 Gew.-% auf, besonders bevorzugt im Bereich von 78 - 90 Gew.-%.

Bevorzugt enthält die Palladiumlegierung des dritten Edelmetalldrahtes das mindestens eine weitere Metall im Bereich von 5 - 25 Gew.-%, besonders bevorzugt im Bereich von 8 - 20 Gew.-%.

Die Palladiumlegierung des dritten Edelmetalldrahtes kann beliebige Kombinationen aus der Gruppe bestehend aus Nickel, Wolfram, Platin und Gold enthalten.

Die Palladiumlegierung des dritten Edelmetalldrahtes kann neben Palladium, Nickel, Wolfram, Platin oder Gold und optional Rhodium Verunreinigungen enthalten. Der Anteil der Verunreinigungen beträgt in der Summe maximal 1 Gew.-% der Palladiumlegierung des dritten Edelmetalldrahtes, bevorzugt maximal 0,5 Gew.-%.

Erfindungsgemäß nimmt der Palladium-Gehalt der Edelmetalldrähte der Katalysatornetz-Gruppen in Strömungsrichtung zu. Diese Zunahme des Palladium-Gehalts hat sich als besonders vorteilhaft für die katalytische Effizienz des Katalysatorsystems herausgestellt. Bevorzugt liegt der Palladium-Gehalt des dritten Edelmetalldrahts um mindestens 2 Gewichts-Prozentpunkte oberhalb des Palladium-Gehalts des zweiten Edelmetalldrahtes, insbesondere um 4 Gewichts-Prozentpunkte, weiter bevorzugt um mindestens 8 Gewichts-Prozentpunkte.

Erfindungsgemäß nimmt der Rhodium-Gehalt der Edelmetalldrähte der Katalysatornetz-Gruppen in Strömungsrichtung ab oder bleibt gleich. Katalysatorsysteme mit einem solchen Rhodiumgradienten haben sich überraschend als effizienter herausgestellt als Systeme, bei denen ein oder mehrere Katalysatornetze umfassend eine Edelmetalldraht aus einer Legierung mit höherem Rhodium-Gehalt im hinteren bzw. hintersten Bereich des Katalysatorsystems angeordnet ist.

In bevorzugten Ausführungsformen liegt der Rhodium-Gehalt des dritten Edelmetalldrahts um mindestens 2 Gewichts-Prozentpunkte unterhalb des Rhodium-Gehalts des zweiten Edelmetalldrahtes, besonders bevorzugt um mindestens 3 Gewichts-Prozentpunkte.

Es kann bevorzugt sein, dass der dritte Edelmetalldraht kein Rhodium enthält. In diesen Fällen ist die Palladiumlegierung des dritten Edelmetalldrahtes bevorzugt eine binäre Legierung, d.h. sie besteht neben Verunreinigungen aus Palladium und nur einer weiteren Komponente. Bevorzugt handelt es sich bei der weiteren Komponente um Platin oder Nickel.

Es kann vorteilhaft sein, wenn der dritte Edelmetalldraht Platin-frei ist. In solchen Ausführungsformen kann der Platin-Anteil im Katalysatorsystem weiter reduziert werden. Besonders bevorzugt umfasst der dritte Edelmetalldraht in solchen Fällen eine binäre Palladiumlegierung, bestehend neben Verunreinigungen aus Palladium und Nickel, Wolfram oder Gold.

Beispiele für bevorzugte Palladiumlegierung des dritten Edelmetalldrahtes umfassen PdPt5Rh5, PdPt15Rh3, PdPt20Rh1, PdNi5, PdW5, PdPt5, PdAu5, PdNi3, PdW3 und PdAu3.

In bevorzugten Ausführungsformen umfasst die dritte Katalysatornetzgruppe 1 bis 10 Katalysatornetze, bevorzugt 2 bis 8. Insbesondere kann die dritte Katalysatornetzgruppe 1, 2, 3, 4, 5, 6, 7, 8, 9 oder 10 Katalysatornetze umfassen. Bevorzugt umfasst die dritte Katalysatornetzgruppe mehr Katalysatornetze als die erste oder zweite Katalysatornetzgruppe.

In der Regel entfällt der größte Anteil am Gesamtvolumen des Katalysatorsystems von beispielsweise mindestens 70 % auf die Katalysatornetze der zweiten und dritten Katalysatorgruppen und es genügt, wenn nur ein kleiner Volumenanteil von beispielsweise weniger als 30 %, vorzugsweise weniger als 25 %, und besonders bevorzugt weniger als 20 % auf Katalysatornetze der ersten Katalysatornetzgruppe aus dem rhodiumreichsten Edelmetalldraht entfällt. Das Volumen des Katalysatorsystems bzw. der Katalysatornetzgruppen wird vor allem durch die Anzahl der jeweils eingesetzten Katalysatornetze bestimmt.

Es kann vorteilhaft sein, dass sowohl der zweite als auch der dritte Edelmetalldraht Platin-frei sind. In solchen Fällen weist das Katalysatorsystem einen besonders niedrigen Platingehalt auf.

In bevorzugten Ausführungsformen des erfindungsgemäßen Katalysatorsystems besteht
- der erste Edelmetalldraht aus einer binären Platinlegierung, bestehend aus Platin und Rhodium,
- der zweite Edelmetalldraht aus einer ternären Palladiumlegierung, bestehend aus Palladium, Platin und Rhodium und
- der dritte Edelmetalldraht aus einer binären Palladiumlegierung, bestehend aus Palladium und Nickel, Wolfram, Platin oder Gold.

Insbesondere kann der erste Edelmetalldraht aus einer PtRh(2-20)-Legierung bestehen, der zweite Edelmetalldraht aus einer PdPt(3-30)Rh(1-10)-Legierung und der dritte Edelmetalldraht aus einer PdNi(3-30)-Legierung, einer PdW(3-30)-Legierung, einer PdPt(3-30)-Legierung oder einer PdAu(3-30)-Legierung. PtRh(a - b) bedeutet hierbei beispielsweise, dass die Legierung Rhodium mit einem Gewichtsanteil im Bereich von a bis b Gewichts-% enthält und der restliche Anteil der (100 - (a bis b)) Gewichts-% bis auf Verunreinigungen aus Platin besteht.

Bevorzugt kann auch sein, dass
- der erste Edelmetalldraht aus einer binären Platinlegierung, bestehend aus Platin und Rhodium,
- der zweite Edelmetalldraht aus einer ternären Palladiumlegierung, bestehend aus Palladium, Platin und Rhodium und
- der dritte Edelmetalldraht aus einer ternären Palladiumlegierung, bestehend aus Palladium, Platin und Rhodium besteht.

Insbesondere kann der erste Edelmetalldraht aus einer PtRh(2-20)-Legierung bestehen, der zweite Edelmetalldraht aus einer PdPt(3-30)Rh(1-10)-Legierung und der dritte Edelmetalldraht aus einer PdPt(3-30)Rh(1-10)-Legierung.

In einer weiteren bevorzugten Ausführungsform besteht
- der erste Edelmetalldraht aus einer binären Platinlegierung, bestehend aus Platin und Rhodium,
- der zweite Edelmetalldraht aus einer binären Palladiumlegierung, bestehend aus Palladium und Nickel, Wolfram, Platin oder Gold und
- der dritte Edelmetalldraht aus einer binären Palladiumlegierung, bestehend Palladium und Nickel, Wolfram, Platin oder Gold.

Insbesondere kann der erste Edelmetalldraht aus einer PtRh(2-20)-Legierung bestehen, der zweite Edelmetalldraht aus einer PdNi(3-30)-Legierung, einer PdW(3-30)-Legierung, einer PdPt(3-30)-Legierung oder einer PdAu(3-30)-Legierung und der dritte Edelmetalldraht aus einer PdNi(3-30)-Legierung, einer PdW(3-30)-Legierung, einer PdPt(3-30)-Legierung oder einer PdAu(3-30)-Legierung.

In weiteren bevorzugten Ausführungsformen des erfindungsgemäßen Katalysatorsystems besteht
- der erste Edelmetalldraht aus einer ternären Platinlegierung, bestehend aus Platin, Palladium und Rhodium,
- der zweite Edelmetalldraht aus einer ternären Palladiumlegierung, bestehend aus Palladium, Platin und Rhodium und
- der dritte Edelmetalldraht aus einer binären Palladiumlegierung, bestehend aus Palladium und Nickel, Wolfram, Platin und Gold.

Insbesondere kann der erste Edelmetalldraht aus einer PtPd(1-20)Rh(2-10)-Legierung bestehen, der zweite Edelmetalldraht aus einer PdPt(3-30)Rh(1-10)-Legierung und der dritte Edelmetalldraht aus einer PdNi(3-30)-Legierung, einer PdW(3-30)-Legierung, einer PdPt(3-30)-Legierung oder einer PdAu(3-30)-Legierung.

Das Katalysatorsystem kann auch weitere Komponenten umfassen.

Das Katalysatorsystem kann beispielsweise vor der ersten Katalysatornetzgruppe eine Zündlage umfassen. Eine Zündlage umfasst einen Edelmetalldraht, der nur Platin und Verunreinigungen enthält.

Es kann auch vorteilhaft sein, dass mindestens das in Strömungsrichtung gesehen vorderste Katalysatornetz einen Edelmetalldraht aus Platin enthält, der neben Verunreinigungen keine weiteren Komponenten enthält. Dieses vordere Katalysatornetz kann ein Katalysatornetz der ersten Katalysatornetzgruppe sein.

Das erfindungsgemäße Katalysatorsystem kann auch mindestens eine weitere Katalysatornetzgruppe aus mindestens einem Katalysatornetz aus mindestens einem weiteren Edelmetalldraht umfassen.

Der mindestens eine weitere Edelmetalldraht kann die gleiche Zusammensetzung aufweisen wie der erste, zweite oder dritte Edelmetalldraht, die Zusammensetzung kann aber auch unterschiedlich sein. Auch in solchen Fällen ist es bevorzugt, dass der Rhodium-Gehalt der Edelmetalldrähte in Strömungsrichtung abnimmt. Der Palladium-Gehalt der Edelmetalldrähte kann in diesem Fall in Strömungsrichtung gleichbleiben, zunehmen oder abnehmen.

Es hat sich als vorteilhaft erwiesen, dass die mindestens eine weitere Katalysatornetzgruppe vor der ersten Katalysatornetzgruppe angeordnet ist. In solchen Fällen hat es sich als besonders vorteilhaft gezeigt, wenn der mindestens eine weitere Edelmetalldraht eine Platinlegierung aufweist, insbesondere eine binäre PtRh-Legierung.

Das erfindungsgemäße Katalysatorsystems kann beispielsweise mindestens vier Katalysatornetzgruppen enthalten, umfassend jeweils mindestens ein Katalysatornetz aus mindestens einem Edelmetalldraht. Die mindestens eine weitere Katalysatornetzgruppe ist dabei bevorzugt vor der ersten Katalysatornetzgruppe angeordnet. Der Rhodium-Gehalt der Edelmetalldrähte nimmt in Strömungsrichtung ab oder bleibt gleich.

Es kann bevorzugt sein, dass
- der mindestens eine weitere Edelmetalldraht eine binäre Platinlegierung aufweist, bestehend aus Platin und Rhodium,
- der erste Edelmetalldraht eine binäre Platinlegierung aufweist, bestehend aus Platin und Rhodium,
- der zweite Edelmetalldraht eine ternäre Palladiumlegierung aufweist, bestehend aus Palladium, Platin und Rhodium und
- der dritte Edelmetalldraht eine binäre Palladiumlegierung aufweist, bestehend aus Palladium und Nickel, Wolfram, Platin oder Gold.

Insbesondere kann der erste Edelmetalldraht aus einer PtRh(2-20)-Legierung bestehen, der zweite Edelmetalldraht aus einer PdPt(3-30)Rh(1-10)-Legierung, der dritte Edelmetalldraht aus einer PdNi(3-30)-Legierung, einer PdW(3-30)-Legierung, einer PdPt(3-30)-Legierung oder einer PdAu(3-30)-Legierung und der mindestens eine weitere Edelmetalldraht aus einer PtRh(2-20)-Legierung.

Bevorzugt kann auch sein, dass
- der mindestens eine weitere Edelmetalldraht eine binäre Platinlegierung aufweist, bestehend aus Platin und Rhodium,
- der erste Edelmetalldraht aus einer binären Platinlegierung, bestehend aus Platin und Rhodium,
- der zweite Edelmetalldraht aus einer ternären Palladiumlegierung, bestehend aus Palladium, Platin und Rhodium und
- der dritte Edelmetalldraht aus einer ternären Palladiumlegierung, bestehend aus Palladium, Platin und Rhodium besteht.

Insbesondere kann der erste Edelmetalldraht aus einer PtRh(2-20)-Legierung bestehen, der zweite Edelmetalldraht aus einer PdPt(3-30)Rh(1-10)-Legierung, der dritte Edelmetalldraht aus einer PdPt(3-30)Rh(1-10)-Legierung und der mindestens eine weitere Edelmetalldraht aus einer PtRh(2-20)-Legierung.

In einer weiteren bevorzugten Ausführungsform besteht
- der mindestens eine weitere Edelmetalldraht aus einer binären Platinlegierung, bestehend aus Platin und Rhodium,
- der erste Edelmetalldraht aus einer binären Platinlegierung, bestehend aus Platin und Rhodium,
- der zweite Edelmetalldraht aus einer binären Palladiumlegierung, bestehend aus Palladium und Nickel, Wolfram, Platin, oder Gold und
- der dritte Edelmetalldraht aus einer binären Palladiumlegierung, bestehend Palladium und Nickel, Wolfram, Platin, oder Gold.

Insbesondere kann der erste Edelmetalldraht aus einer PtRh(2-20)-Legierung bestehen, der zweite Edelmetalldraht aus einer PdNi(3-30)-Legierung, einer PdW(3-30)-Legierung, einer PdPt(3-30)-Legierung oder einer PdAu(3-30)-Legierung, der dritte Edelmetalldraht aus einer PdNi(3-30)-Legierung, einer PdW(3-30)-Legierung, einer PdPt(3-30)-Legierung oder einer PdAu(3-30)-Legierung und der mindestens eine weitere Edelmetalldraht aus einer PtRh(2-20)-Legierung.

In bevorzugten Ausführungsform kann das erfindungsgemäße Katalysatorsystem mindestens ein Trennelement zwischen zwei der Katalysatornetz-Gruppen umfassen, beispielsweise in Form von mindestens einem Zwischennetz. Solche Zwischennetze können eingesetzt werden, um einer Kompression benachbarter Katalysatornetz-Gruppen unter Druckbelastung entgegenzuwirken. Das Zwischennetz oder die Zwischennetze verfügt vorzugsweise über eine im Vergleich zu den Katalysatornetzen der Katalysatornetz-Gruppen eingeschränkte Flexibilität.

Als Trennelemente eignen sich beispielsweise Elemente oder Netze aus einem hitzebeständigen Stahl, typischerweise einer FeCrAI-Legierung wie Megapyr oder Kanthal, Edelstahl oder aus hitzebeständigen Legierungen wie beispielsweise Nickel-Chrom-Legierungen. Das oder die Trennelemente können außerdem eine katalytisch aktive Beschichtung umfassend mindestens ein Edelmetall aufweisen.

Es hat sich als vorteilhaft erwiesen, wenn zwischen der ersten Katalysatornetzgruppe und der zweiten Katalysatornetzgruppe ein Trennelement angeordnet ist, insbesondere ein Zwischennetz. Als besonders vorteilhaft haben sich Zwischennetze aus Megapyr oder Kanthal herausgestellt.

Trennelemente in Form von Zwischennetzen können auch innerhalb der Katalysatornetzgruppen angeordnet sein.

Das erfindungsgemäße Katalysatorsystem ist zur Herstellung von Salpetersäure nach dem Ostwald-Verfahren geeignet. Dabei wird das Katalysatorsystem von einem Ammoniak-Sauerstoff-Gemisch durchströmt, mit anderen Worten handelt es sich dabei um eine katalytische Ammoniakverbrennung.

Das erfindungsgemäße Katalysatorsystem ist außerdem zur Herstellung von Blausäure nach dem Andrussow-Verfahren geeignet. Dabei wird das Katalysatorsystem von einem Ammoniak-Methan-Sauerstoff-Gemisch durchströmt.

Die vorliegende Erfindung betrifft außerdem ein Verfahren zur katalytischen Oxidation von Ammoniak, bei dem ein mindestens Ammoniak enthaltendes Frischgas durch das erfindungsgemäße Katalysatorsystem geleitet wird. Für bevorzugte Ausführungsformen des Katalysatorsystems sei auf die vorangegangenen Ausführungen verwiesen.

Bevorzugt liegt der Ammoniakgehalt des Frischgases zwischen 9,5 und 12 Vol.-%.

Der Druck des Frischgases beträgt bevorzugterweise zwischen 1 und 14 bar, insbesondere zwischen 3 und 10 bar. Die Katalysatornetztemperatur liegt bevorzugt im Bereich von 500 bis 1300 °C, bevorzugt im Bereich von 800 bis 1100 °C.

Bevorzugterweise wird das Frischgas mit einem Durchsatz im Bereich von 6 bis 60 tN/m²d durch ein Katalysatorsystem gemäß der vorliegenden Erfindung geleitet. Die Abkürzung "tN/m²d" steht dabei für "Tonnen Stickstoff (aus Ammoniak) pro Tag und normierter effektiver Querschnittsfläche des Katalysatorsystems von einem Quadratmeter.

Nachfolgend wird die Erfindung anhand einer Zeichnung und Ausführungsbeispielen sowie einem Versuch zur katalytischen Aktivität erläutert.

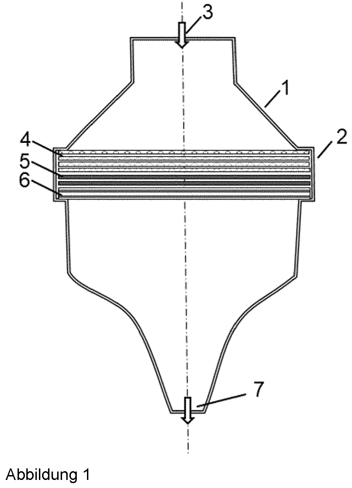

**Abbildung 1** zeigt schematisch einen senkrecht positionierten Strömungsreaktor 1 zur heterogen-katalytischen Verbrennung von Ammoniak. Das Katalysatorsystem 2 bildet die eigentliche Reaktionszone des Strömungsreaktors 1. Das Katalysatorsystem 2 umfasst mehrere, in Strömungsrichtung 3 des Frischgases hintereinander angeordnete Katalysatornetzgruppen (4, 5, 6).

Das Frischgas ist ein Ammoniak-Luftgemisch mit einem nominalen Ammoniakgehalt von 10,7 Vol.%. Es wird auf eine Vorheiztemperatur von 175 °C erwärmt und von oben in den Reaktor 1 unter einem erhöhten Druck von 5 bar eingeleitet. Beim Eintritt in das Katalysatorsystem 2 erfolgen eine Zündung des Gasgemischs und eine anschließende exotherme Verbrennungsreaktion. Dabei findet folgende Hauptreaktion statt:

4 NH₃ + 5O₂ -> 4 NO + 6 H₂O

Dabei wird Ammoniak (NH₃) zu Stickstoffmonoxid (NO) und Wasser (H₂O) umgesetzt. Das gebildete Stickstoffmonoxid (NO) reagiert im abströmenden Reaktionsgasgemisch (symbolisiert durch den die Strömungsrichtung des abströmenden Reaktionsgasgemischs anzeigenden Richtungspfeil 7) mit überschüssigem Sauerstoff zu Stickstoffdioxid (NO₂), das mit Wasser in einer nachgeschalteten Absorptionsanlage zu Salpetersäure (HNOs) umgesetzt wird.

Die Katalysatornetze sind jeweils textile Flächengebilde, die durch maschinelles Wirken eines Edelmetalldrahtes mit einem Durchmesser von typischerweise 76 µm aus der jeweiligen Edelmetall-Legierung hergestellt werden. In den **Tabellen 1** und **2** sind Ausführungsbeispiele (E1 - E11) für Katalysatorsysteme angegeben, die in einem Strömungsreaktor 1 eingesetzt werden können.

**Tabelle 1:**

| | E1 | E2 | E3 | E4 | E5 | E6 |
|---|---|---|---|---|---|---|
| G1 | PtRh5 | PtRh5 | PtRh5 | PtRh5 | PtRh5 | PtRh5 |
| G2 | PdPt15Rh3 | PdPt15Rh3 | PdPt10Rh3 | PdPt15Rh3 | PdPt15 | PdPt20Rh1 |
| G3 | PdPt5 | PdNi5 | PdNi5 | PdNi5 | PdNi5 | PdNi5 |

**Tabelle 2:**

| | E7 | E8 | E9 | E10 | E11 |
|---|---|---|---|---|---|
| G1 | PtRh5 | PtRh5Pd5 | PtRh5Pd5 | PtPd15Rh5 | PtPd15Rh5 |
| G2 | PdPt10Rh1 | PdPt20 | PdPt10Rh5 | PdPt10Rh5 | PdPt5Rh5 |
| G3 | PdW5 | PdNi5 | PdPt5Rh5 | PdPt5 | PdW5 |

Die Katalysatorsysteme umfassen jeweils 3 Katalysatornetzgruppen mit insgesamt 30 Katalysatornetzen, die Reihenfolge der Benennung G1 bis G3 gibt die Anordnung in Strömungsrichtung des Frischgases wieder.

**Tabelle 3** gibt die Zusammensetzung eines Katalysatorsystems E12 mit 4 Katalysatornetzgruppen an, bei dem eine Rhodium-reichere Gruppe G0 vor dem erfindungsgemäßen Katalysatorsystem mit G1 - G3 angeordnet ist.

**Tabelle 3:**

| | E12 |
|---|---|
| G0 | PtRh8 |
| G1 | PtRh5 |
| G2 | PdPt15Rh3 |
| G3 | PdNi5 |

In einem Testreaktor gemäß Abbildung 1 wurden die Katalysatorsysteme E1 - E12 mit Katalysatorsystemen verglichen, bei dem die Anordnung der Katalysatornetzgruppen G2 und G3 vertauscht wurde. In den Vergleichsreaktoren befand sich die Katalysatornetzgruppe mit der Rhodium-reicheren Legierung also hinter der Rhodium-ärmeren Legierung. Beide Reaktoren verfügten jeweils über den gleichen Gehalt an katalytisch wirksamen Edelmetall.

Die Testreaktoren wurden bei den folgenden, jeweils gleichen Testbedingungen betrieben.

| | |
|---|---|
| Druck: | 5 bar (absolut) |
| Durchsatz: | 12 Tonnen Stickstoff (aus Ammoniak) pro Tag und effektiver Querschnittsfläche der Katalysatorpackung in Quadratmeter (abgekürzt mit 12 tN/m²d) |
| NH₃-Anteil: | 10,7 Vol.-% im Frischgas |
| Vorheiztemp.: | 175°C (Temperatur des NH₃/Luft Gemisches), woraus sich eine Netztemperatur von 890°C ergibt. |

Im Abstand von etwa 12 h wurde über einen Zeitraum von 4 Tagen die Entwicklung der Katalysatoreffizienz des Katalysators (Ausbeute an NO in %) und die Menge des als unerwünschtes Nebenprodukt anfallenden Lachgases N₂O gemessen.

Die Messung der katalytischen Effizienz (das heißt, der Produktausbeute an NO) hat folgenden Ablauf:
1. Vorab wird sichergestellt, dass das Katalysatorsystem für den vollständigen Umsatz des eingesetzten Ammoniaks geeignet ist. Das bedeutet, dass NH₃ im Produktgas nicht mehr in nennenswerter Menge vorhanden ist, was mittels massenspektrometrischer Untersuchung des Produktgases überprüft wird.
2. Gleichzeitige Entnahme eine Probe von NH₃/Luft stromaufwärts zur Katalysatorpackung und einer Probe aus dem Produktgas stromabwärts in jeweils eigenständige evakuierte Kolben. Die Masse des Gases wird durch Wiegen bestimmt.
3. Das NH₃ Luft/Gemisch wird in destilliertem Wasser absorbiert und mittels 0.1 N Schwefelsäure und Methylrot nach Farbumschlag titriert.
4. Die nitrosen Produktgase werden in 3 %iger Natriumperoxid Lösung absorbiert und mittels 0.1 N Natriumhydroxid Lösung und Methylrot nach Farbumschlag titriert.
5. Die katalytische Effizienz Eta ergibt sich aus: Eta = 100 x Cₙ / Cₐ, wobei Cₐ die mittlere NH₃ Konzentration aus 7 Einzelmessungen im Frischgas in Gewichtsprozent und Cₙ die mittlere NOₓ Konzentration aus 7 Einzelmessungen ist, ausgedrückt als Gewichtsprozent des NH₃ welches zu NOₓ oxidiert worden ist.
6. Separat wird der Volumenanteil an N₂O im Produktgas mittels Gas-Chromatographie bestimmt.

In den erfindungsgemäß ausgestatteten Reaktoren konnte eine über den gesamten Testzeitraum um durchschnittlich 0,4 % erhöhte Effizienz bei einem vergleichbarem Anteil an N₂O beobachtet werden. In diesem Technologiebereich stellt die Erhöhung um 0,4 % eine signifikante und wirtschaftlich bedeutende Steigerung dar.

## Patentansprüche

1. Katalysatorsystem für einen Strömungsreaktor, umfassend mindestens drei in Strömungsrichtung hintereinander angeordnete Katalysatornetz-Gruppen,
wobei jede Katalysatornetz-Gruppe aus mindestens einem Katalysatornetz aus jeweils mindestens einem Edelmetalldraht gebildet wird und
- die erste Katalysatornetz-Gruppe mindestens ein Katalysatornetz aus mindestens einem ersten Edelmetalldraht aus einer Platinlegierung aufweist, wobei die Platinlegierung neben Verunreinigungen aus 80 - 98 Gew.-% Platin, 2 - 20 Gew.-% Rhodium und 0 - 20 Gew.-% Palladium besteht,
- die zweite Katalysatornetz-Gruppe mindestens ein Katalysatornetz aus mindestens einem zweiten Edelmetalldraht aus einer Palladiumlegierung aufweist, wobei die Palladiumlegierung des zweiten Edelmetalldrahts neben Verunreinigungen aus 70 - 97 Gew.-% Palladium, 0 - 10 Gew.-% Rhodium und 3 - 30 Gew.-% mindestens eines weiteren Metalls besteht, wobei das mindestens eine weitere Metall ausgewählt ist aus der Gruppe bestehend aus Nickel, Wolfram, Platin und Gold und
- die dritte Katalysatornetz-Gruppe mindestens ein Katalysatornetz aus mindestens einem dritten Edelmetalldraht aus einer Palladiumlegierung aufweist, wobei die Palladiumlegierung des dritten Edelmetalldrahts neben Verunreinigungen aus 72 - 97 Gew.-% Palladium, 0 - 10 Gew.-% Rhodium und 3 - 28 Gew.-% mindestens eines weiteren Metalls besteht, wobei das mindestens eine weitere Metall ausgewählt ist aus der Gruppe bestehend aus Nickel, Wolfram, Platin und Gold
**dadurch gekennzeichnet, dass**
- der Rhodium-Gehalt der Edelmetalldrähte der Katalysatornetz-Gruppen in Strömungsrichtung abnimmt oder gleichbleibt und
- der Palladium-Gehalt der Edelmetalldrähte der Katalysatornetz-Gruppen in Strömungsrichtung zunimmt.

2. Katalysatorsystem gemäß Anspruch 1, wobei die Katalysatornetze unabhängig voneinander gewebt, gewirkt oder gestrickt sind.

3. Katalysatorsystem gemäß Anspruch 1 oder 2, wobei mindestens eins der Katalysatornetze eine dreidimensionale Struktur aufweist.

4. Katalysatorsystem gemäß Anspruch 3, wobei mindestens eins der Katalysatornetze korrugiert ist.

5. Katalysatorsystem gemäß einem der vorangegangenen Ansprüche, wobei die Edelmetalldrähte einen Durchmesser von 40 - 250 µm aufweisen.

6. Katalysatorsystem gemäß einem der vorangegangenen Ansprüche, wobei der erste Edelmetalldraht eine binäre Platinlegierung umfasst, die neben Verunreinigungen aus Platin und Rhodium besteht.

7. Katalysatorsystem gemäß einem der vorangegangenen Ansprüche, wobei der zweite Edelmetalldraht eine ternäre Palladiumlegierung umfasst, die neben Verunreinigungen aus Palladium, Platin und Rhodium besteht oder eine binäre Palladiumlegierung umfasst, die neben Verunreinigungen aus Palladium und Nickel, Wolfram, Platin oder Gold besteht.

8. Katalysatorsystem gemäß einem der vorangegangenen Ansprüche, wobei der Palladium-Gehalt des dritten Edelmetalldrahts um mindestens 2 Gewichts-Prozentpunkte oberhalb des Palladium-Gehalts des zweiten Edelmetalldrahtes liegt.

9. Katalysatorsystem gemäß einem der vorangegangenen Ansprüche, wobei der Rhodium-Gehalt des dritten Edelmetalldrahts um mindestens 2 Gewichts-Prozentpunkte unterhalb des Rhodium-Gehalts des zweiten Edelmetalldrahtes liegt.

10. Katalysatorsystem gemäß einem der vorangegangenen Ansprüche, wobei der dritte Edelmetalldraht eine binäre Palladiumlegierung umfasst, die neben Verunreinigungen aus Palladium und Nickel, Wolfram, Platin oder Gold besteht.

11. Katalysatorsystem gemäß einem der vorangegangenen Ansprüche, wobei der dritte Edelmetalldraht Platin-frei ist.

12. Katalysatorsystem gemäß einem der vorangegangenen Ansprüche, wobei der dritte Edelmetalldraht Rhodium-frei ist

13. Katalysatorsystem gemäß einem der vorangegangenen Ansprüche, wobei das Katalysatorsystem mindestens eine weitere Katalysatornetzgruppe aus mindestens einem Katalysatornetz aus mindestens einem weiteren Edelmetalldraht umfasst.

14. Katalysatorsystem gemäß einem der vorangegangenen Ansprüche, wobei das Katalysatorsystem mindestens ein Trennelement zwischen zwei der Katalysatornetzgruppen umfasst.

15. Verfahren zur katalytischen Oxidation von Ammoniak, bei dem ein mindestens Ammoniak enthaltendes Frischgas durch ein Katalysatorsystem gemäß einem der vorangegangenen Ansprüche geleitet wird.

## Claims

1. A catalyst system for a flow reactor, comprising at least three catalyst network groups arranged one behind the other in the flow direction, each catalyst network group being formed from at least one catalyst network composed of at least one noble metal wire in each case, and
- the first catalyst network group comprising at least one catalyst network composed of at least one first noble metal wire made of a platinum alloy, the platinum alloy consisting of, in addition to impurities, 80-98 wt.% platinum, 2-20 wt.% rhodium, and 0-20 wt.% palladium,
- the second catalyst network group comprising at least one catalyst network composed of at least one second noble metal wire made of a palladium alloy, the palladium alloy of the second noble metal wire consisting of, in addition to impurities, 70-97 wt.% palladium, 0-10 wt.% rhodium, and 3-30 wt.% of at least one further metal, the at least one further metal being selected from the group consisting of nickel, tungsten, platinum and gold, and
- the third catalyst network group comprising at least one catalyst network composed of at least one third noble metal wire made of a palladium alloy, the palladium alloy of the third noble metal wire consisting of, in addition to impurities, 72-97 wt.% palladium, 0-10 wt.% rhodium, and 3-28 wt.% of at least one further metal, the at least one further metal being selected from the group consisting of nickel, tungsten, platinum and gold,
**characterized in that**
- the rhodium content of the noble metal wires of the catalyst network groups decreases or remains constant in the flow direction, and
- the palladium content of the noble metal wires of the catalyst network groups increases in the flow direction.

2. The catalyst system according to claim 1, wherein the catalyst networks are woven or knitted independently of one another.

3. The catalyst system according to claim 1 or 2, wherein at least one of the catalyst networks comprises a three-dimensional structure.

4. The catalyst system according to claim 3, wherein at least one of the catalyst networks is corrugated.

5. The catalyst system according to any of the preceding claims, wherein the noble metal wires have a diameter of 40-250 µm.

6. The catalyst system according to any of the preceding claims, wherein the first noble metal wire comprises a binary platinum alloy which consists of, in addition to impurities, platinum and rhodium.

7. The catalyst system according to any of the preceding claims, wherein the second noble metal wire comprises a ternary palladium alloy which consists of, in addition to impurities, palladium, platinum and rhodium, or comprises a binary palladium alloy which consists of, in addition to impurities, palladium and nickel, tungsten, platinum or gold.

8. The catalyst system according to any of the preceding claims, wherein the palladium content of the third noble metal wire is above the palladium content of the second noble metal wire by at least 2 weight percentage points.

9. The catalyst system according to any of the preceding claims, wherein the rhodium content of the third noble metal wire is below the rhodium content of the second noble metal wire by at least 2 weight percentage points.

10. The catalyst system according to any of the preceding claims, wherein the third noble metal wire comprises a binary palladium alloy which consists of, in addition to impurities, palladium and nickel, tungsten, platinum or gold.

11. The catalyst system according to any of the preceding claims, wherein the third noble metal wire is platinum-free.

12. The catalyst system according to any of the preceding claims, wherein the third noble metal wire is rhodium-free.

13. The catalyst system according to any of the preceding claims, wherein the catalyst system comprises at least one further catalyst network group composed of at least one catalyst network composed of at least one further noble metal wire.

14. The catalyst system according to any of the preceding claims, wherein the catalyst system comprises at least one separating element between two of the catalyst network groups.

15. A method for catalytic oxidation of ammonia, in which a fresh gas containing at least ammonia is conducted through a catalyst system according to any of the preceding claims.

## Revendications

1. Système catalytique pour un réacteur à écoulement, comprenant au moins trois groupes de filets catalytiques disposés les uns derrière les autres dans le sens de l'écoulement, dans lequel chaque groupe de filets catalytiques est formé à partir d'au moins un filet catalytique constitué respectivement d'au moins un fil de métal précieux et
- le premier groupe de filets catalytiques présente au moins un filet catalytique constitué d'au moins un premier fil de métal précieux en un alliage de platine, dans lequel l'alliage de platine est constitué, outre les impuretés, de 80 à 98 % en poids de platine, 2 à 20 % en poids de rhodium et 0 à 20 % en poids de palladium,
- le deuxième groupe de filets catalytiques présente au moins un filet catalytique constitué d'au moins un deuxième fil de métal précieux en un alliage de palladium, dans lequel l'alliage de palladium du deuxième fil de métal précieux est constitué, outre les impuretés, de 70 à 97 % en poids de palladium, 0 à 10 % en poids de rhodium et 3 à 30 % en poids d'au moins un autre métal, dans lequel l'au moins un autre métal est choisi dans le groupe constitué de nickel, tungstène, platine et or et
- le troisième groupe de filets catalytiques présente au moins un filet catalytique constitué d'au moins un troisième fil de métal précieux en un alliage de palladium, dans lequel l'alliage de palladium du troisième fil de métal précieux est constitué, outre les impuretés, de 72 à 97 % en poids de palladium, 0 à 10 % en poids de rhodium et 3 à 28 % en poids d'au moins un autre métal, dans lequel l'au moins un autre métal est choisi dans le groupe constitué de nickel, tungstène, platine et or
**caractérisé en ce que**
- la teneur en rhodium des fils de métal précieux des groupes de filets catalytiques diminue ou reste identique dans le sens de l'écoulement et
- la teneur en palladium des fils de métal précieux des groupes de filets catalytiques augmente dans le sens de l'écoulement.

2. Système catalytique selon la revendication 1, dans lequel les filets catalytiques sont tissés, tricotés ou maillés indépendamment les uns des autres.

3. Système catalytique selon la revendication 1 ou 2, dans lequel au moins un des filets catalytiques présente une structure tridimensionnelle.

4. Système catalytique selon la revendication 3, dans lequel au moins un des filets catalytiques est ondulé.

5. Système catalytique selon l'une des revendications précédentes, dans lequel les fils de métal précieux présentent un diamètre allant de 40 à 250 µm.

6. Système catalytique selon l'une des revendications précédentes, dans lequel le premier fil de métal précieux comprend un alliage de platine binaire qui est constitué, outre les impuretés, de platine et de rhodium.

7. Système catalytique selon l'une des revendications précédentes, dans lequel le deuxième fil de métal précieux comprend un alliage de palladium ternaire qui est constitué, outre les impuretés, de palladium, de platine et de rhodium, ou comprend un alliage de palladium binaire qui est constitué, outre les impuretés, de palladium et de nickel, tungstène, platine ou or.

8. Système catalytique selon l'une des revendications précédentes, dans lequel la teneur en palladium du troisième fil de métal précieux est supérieure d'au moins 2 points de pourcentage en poids à la teneur en palladium du deuxième fil de métal précieux.

9. Système catalytique selon l'une des revendications précédentes, dans lequel la teneur en rhodium du troisième fil de métal précieux est inférieure d'au moins 2 points de pourcentage en poids à la teneur en rhodium du deuxième fil de métal précieux.

10. Système catalytique selon l'une des revendications précédentes, dans lequel le troisième fil de métal précieux comprend un alliage de palladium binaire qui est constitué, outre les impuretés, de palladium et de nickel, tungstène, platine ou or.

11. Système catalytique selon l'une des revendications précédentes, dans lequel le troisième fil de métal précieux est exempt de platine.

12. Système catalytique selon l'une des revendications précédentes, dans lequel le troisième fil de métal précieux est exempt de rhodium.

13. Système catalytique selon l'une des revendications précédentes, dans lequel le système catalytique comprend au moins un autre groupe de filets catalytiques constitué d'au moins un filet catalytique en au moins un autre fil de métal précieux.

14. Système catalytique selon l'une des revendications précédentes, dans lequel le système catalytique comprend au moins un élément de séparation entre deux des groupes de filets catalytiques.

15. Procédé pour l'oxydation catalytique d'ammoniac, dans lequel un gaz frais contenant au moins de l'ammoniac est guidé à travers un système catalytique selon l'une des revendications précédentes.
